# EUROPEAN PATENT APPLICATION

(11) **EP 4 273 953 A1**
(43) Date of publication of application: **08.11.2023**
(21) Application number: 22908815.8
(22) Date of filing: 16.06.2022
(51) Int. Cl.: H01M 4/13

(54) **ELECTRODE PLATE, AND SECONDARY BATTERY COMPRISING SAME**

(30) Priority: 29.01.2022 CN 202210110205
(71) Applicant: Contemporary Amperex Technology Co., Limited, Ningde, Fujian 352100 (CN)
(72) Inventor: TANG, Huaichao, Ningde, Fujian 352100 (CN); LI, Ting, Ningde, Fujian 352100 (CN); PENG, Longqing, Ningde, Fujian 352100 (CN); NIU, Shaojun, Ningde, Fujian 352100 (CN); JIN, Haizu, Ningde, Fujian 352100 (CN); OUYANG, Minggao, Ningde, Fujian 352100 (CN); WU, Kai, Ningde, Fujian 352100 (CN)
(74) Representative: Ziebig Hengelhaupt Intellectual Property Attorneys Patentanwaltskanzlei PartGmbB
(86) International application number: PCT/CN2022/099280
(87) International publication number: WO 2023/142340

(57) **Abstract**

The present application provides an electrode plate and a secondary battery having the same. The electrode plate comprises a current collector and an active material layer, wherein the current collector comprises a main body portion and tabs, the active material layer is coated on the surface of the main body portion, and the tabs extend from one end of the main body portion along the first direction; a first insulating portion is formed on the end face of the main body portion that is provided with the tabs, and a second insulating portion different from the first insulating portion is formed on the end faces of the main body portion that are not provided with the tabs. The electrode plate of the present application has a good end-face insulation protection and can improve the safety performance of the secondary battery.

## Description

### Cross-Reference to Related Applications

The present application refers to Chinese patent application no. 202210110205.X, filed on January 29, 2022 and entitled "ELECTRODE PLATE AND SECONDARY BATTERY HAVING THE SAME", which is incorporated herein by reference in its entirety.

### Technical Field

The present application relates to the field of batteries, and in particular, to an electrode plate and a secondary battery having the same, and a battery module, a battery pack, and a power consuming device.

### Background Art

With the development of electronic and intelligent devices, there are increasingly urgent demands for secondary energy storage batteries, especially for lithium ion batteries with high energy density. Taking a lithium ion battery as an example, the gradual increase in energy density is often accompanied by the aggravation of safety hazards. For example, the contact between electrode plates of different polarities inside the battery is easy to lead to short circuit, which increases the probability of internal short circuit of the battery and subsequently increases the probability of safety issues such as fire.

### Summary of the Invention

The present application has been made in view of the above problems, and an objective of the present application is to provide an electrolyte plate and a secondary battery having the same, and a battery module, a battery pack and a power consuming device. The electrode plate has a good end-face insulation protection and can improve the safety performance of the secondary battery.

In order to achieve the above objective, a first aspect of the present application provides an electrode plate comprising a current collector and an active material layer, wherein the current collector comprises a main body portion and tabs, the active material layer is coated on the surface of the main body portion, and the tabs extend from one end of the main body portion along the first direction; a first insulating portion is formed on the end face of the main body portion that is provided with the tabs, and a second insulating portion is formed on the end faces of the main body portion that are not provided with the tabs.

Since the end face of the current collector is exposed in the processes of cutting the current collector and processing the tabs, the end face is directly exposed to the electrolyte solution, which increases the probability of internal short circuit caused by the direct contact between the end face and electrodes of opposite polarity. By forming a first insulating portion on the end face that is provided with the tabs and forming a second insulating portion on the end faces that are not provided with the tabs, the contact between the electrode plates of opposite polarity can be effectively prevented, thus avoiding internal short circuit and increasing the safety performance.

In some embodiments, the surface of the main body portion that is close to the end portion of the tabs is coated with a third insulating portion along the second direction perpendicular to the first direction, and the third insulating portion is connected with the first insulating portion. By connecting the third insulating portion with the first insulating portion, the end face of the electrode plate that is exposed in the process of cutting the tabs can be effectively protected, which further increases the safety performance.

In some embodiments, the third insulating portion and the first insulating portion are made of the same material and are integrally formed. Thus, the first insulating portion can be easily formed.

In some embodiments, the surface of the tabs that is close to the main body portion is coated with a third insulating portion, and the end face of the tabs that is connected with the third insulating portion is provided with a first insulating portion. Thus, the end face of the electrode plate that is exposed in the process of cutting the tabs can be further effectively protected, which further increases the safety performance.

In some embodiments, the first insulating portion comprises polymerization, a polymer has a melting point of 80°C - 300°C. By using a polymer having a melting point within the above range to form a first insulating portion, the polymer can be melted and then cured during the processing of the tabs, which further densely coats the end face of the electrode plate, thereby further increasing the safety performance.

In some embodiments, the first insulating portion comprises a polymer selected from at least one of polyolefins. With the use of the above polymer to form the first insulating portion, the end face of the electrode plate can be densely coated, which further increases the safety performance.

In some embodiments, the first insulating portion and the third insulating portion comprise a polymer and ceramic. The polymer is selected from at least one of polyolefins, and the mass ratio of the polymer to the ceramic is above 26 : 74. Because the first insulating portion and the third insulating portion comprises the polymer and ceramic, the compactness of the insulating portions can be improved, so that on the one hand, the insulating property of the end face of the electrode plate is ensured, and on the other hand, the damage of the insulating portion is avoided.

In some embodiments, the first insulating portion is formed by laser processing the third insulating portion. The insulating portion can be melted by laser processing, and then cured to form a first insulating portion coating the end face, which makes it easy to form the first insulating portion and further increases the safety performance.

In some embodiments, the first insulating portion is an insulating coating layer formed on the end face during the processing of the tabs. Therefore, while the tabs are cut out from the electrode plate coated with the third insulating portion by laser processing, the third insulating portion can be melted and then cured on the end face of the incision to form a first insulating portion coating the end face, which can make it easy to form the first insulating portion and further increase the safety performance.

A second aspect of the present application provides a secondary battery comprising the electrode plate according to the first aspect of the present application.

A third aspect of the present application provides a battery module comprising the secondary battery according to the second aspect of the present application.

A fourth aspect of the present application provides a battery pack comprising the battery module according to the third aspect of the present application.

A fifth aspect of the present application provides a power consuming device comprising at least one of the secondary battery according to the second aspect of the present application, the battery module according to the third aspect of the present application, and the battery pack according to the forth aspect of the present application.

According to the present application, the internal short circuit between electrode plates of different polarities can be prevented, thereby improving the safety performance.

### Brief Description of the Drawings

In order to illustrate the technical solutions of the embodiments of the present application more clearly, the accompanying drawings required in the embodiments of the present application will be described briefly below. Obviously, the accompanying drawings described below are merely some embodiments of the present application, and for those of ordinary skill in the art, other accompanying drawings can also be obtained from these accompanying drawings without any creative efforts.
FIG. 1 is a schematic diagram of a secondary battery according to an embodiment of the present application.
FIG. 2 is an exploded view of a secondary battery according to an embodiment of the present application as shown in FIG. 1.
FIG. 3 shows a schematic top view of a wound electrode plate as seen from arrow A-A, after the case of the electrode assembly according to an embodiment of the present application shown in FIG. 2 is removed.
FIG. 4 shows a schematic cross-sectional view of an electrode plate as seen from arrow B-B, after the case of the electrode assembly according to an embodiment of the present application shown in FIG. 2 is removed.
FIG. 5 shows a cross-sectional view of an electrode plate according to an embodiment of the present application as shown in FIG. 4, as seen from arrow C-C.
FIG. 6 shows a cross-sectional view of an electrode plate according to an embodiment of the present application as shown in FIG. 4, as seen from arrow D-D.
FIG. 7 shows a schematic cross-sectional view of an electrode plate according to an embodiment of the present application before processing the tabs.
FIG. 8 shows a schematic diagram of a battery module according to an embodiment of the present application.
FIG. 9 shows a schematic diagram of a battery pack according to an embodiment of the present application.
FIG. 10 shows an exploded view of a battery pack according to an embodiment of the present application as shown in FIG. 9.
FIG. 11 shows a schematic diagram of a power consuming device using a secondary battery according to an embodiment of the present application as a power source.
FIG. 12 shows a microscope photograph of an end face that is coated with a first insulating portion of an electrode plate according to an example of the present application.
FIG. 13 shows a microscope photograph of an end face that is coated with a second insulating portion of an electrode plate according to an example of the present application.
FIG. 14 shows a microscope photograph of an end face of an electrode plate in the prior art.

### List of reference numerals:

1 - battery pack; 2 - upper box body; 3 - lower box body; 4 - battery module; 5 - secondary battery; 51 - housing; 52 - electrode assembly; 53 - top cover assembly; 6 - first electrode plate; 7 - second electrode plate; 9 - separator; 54 - connecting member; 55 - electrode terminal; 100 - active material layer; 120 - current collector; 121 - main body portion; 122 - tab; 123 - tab area; 124 - cutting line; 200 - first insulating portion; 210 - second insulating portion; 121a, 121b, 121c, and 121d - end face; 110 - third insulating portion.

### Detailed Description of Embodiments

Hereafter, embodiments of an electrode plate, a secondary battery, a battery module, a battery pack and a power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed in the text, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All technical features and optional technical features of the present application can be combined with one another to form a new technical solution, unless otherwise stated.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

### [Secondary battery]

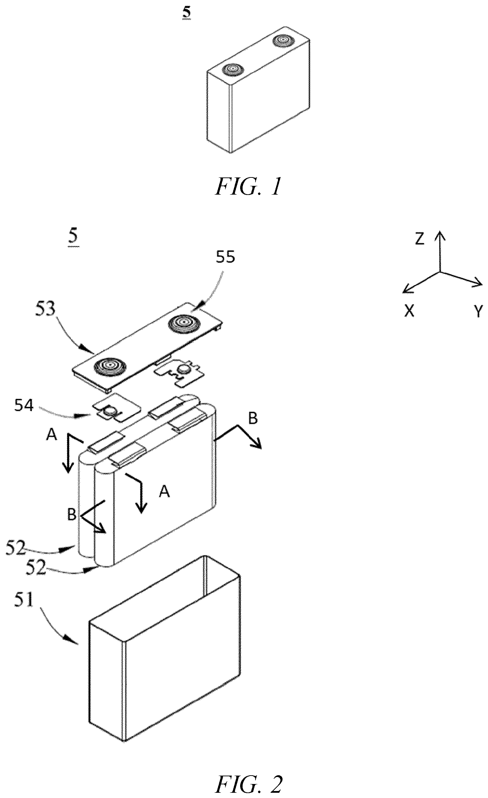

FIG. 1 shows a secondary battery 5 with a square structure. In the present application, the secondary battery includes a lithium ion battery, a lithium-sulfur battery, a sodium-lithium ion battery, a sodium ion battery or a magnesium ion battery, etc. The concept of the present application will be described below mainly using a lithium ion battery as an example. It should be construed that any other suitable types of rechargeable batteries are all applicable.

With reference to FIG.2, a secondary battery 5 of an example according to the present application comprises a case (comprising a housing 51 and a top cover assembly 53), and an electrode assembly 52. Herein, the housing 51 may comprise a bottom plate and side plates connected to the bottom plate, and the bottom plate and the side plates enclose to form an accommodating cavity. The shape of the housing 51 is not particularly limited in the present application, and may be cylindrical, square or of any other shape. The housing 51 has an opening in communication with the accommodating cavity, and the top cover assembly 53 can cover the opening to close the accommodating cavity. The electrode assembly 52 is packaged in the accommodating cavity. The electrolyte solution infiltrates the electrode assembly 52. The number of the electrode assemblies 52 contained in the secondary battery 5 may be one or more, and can be selected by those skilled in the art according to actual requirements.

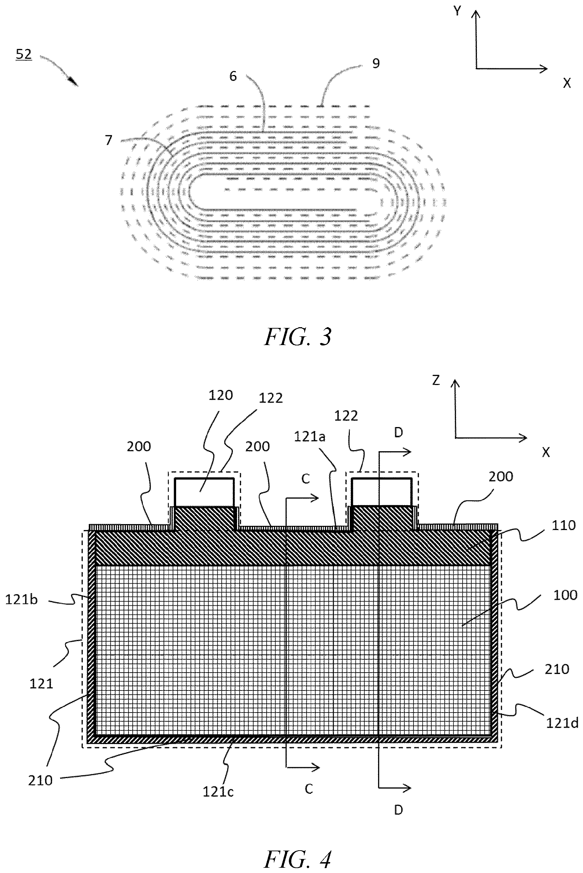

The electrode assembly 52 is the core member for a secondary battery to realize the charging and discharging functions. With reference to FIG.3, the electrode assembly 52 comprises a first electrode plate 6, a second electrode plate 7, and a separator 9, where the separator 9 isolates the first electrode plate 6 and the second electrode plate 7. The lithium ion battery operates mainly by relying on the movement of lithium ions between the first electrode plate 6 and the second electrode plate 7 through the separator 9.

The electrode assembly 52 may be of a winding structure. Specifically, the number of the first electrode plate 6 and the second electrode plate 7 is one, and the first electrode plate 6 and the second electrode plate 7 have a strip-shaped structure. The first electrode plate 6, the separator 9 and the second electrode plate 7 are stacked in sequence and wound for more than two circles to form an electrode assembly 52. The electrode assembly 52 may have a flat shape.

Alternatively, the electrode assembly 52 may also be of a laminated structure. Specifically, a plurality of first electrode plates 6 and a plurality of second electrode plates 7 are provided, the plurality of first electrode plates 6 and the plurality of second electrode plates 7 are stacked alternately, and a separator 9 is provided to isolate the first electrode plates 6 and the second electrode plates 7.

There are two electrode terminals 55, which are provided on the top cover assembly 53. There are two connecting members 54. One of the connecting members 54 is used to connect the electrode terminal 55 with the first electrode plate 6 of the electrode assembly 52, and the other connecting member 54 is used to connect the other electrode terminal 55 with the second electrode plate 7 of the electrode assembly 52.

### [Structure of the electrode plate]

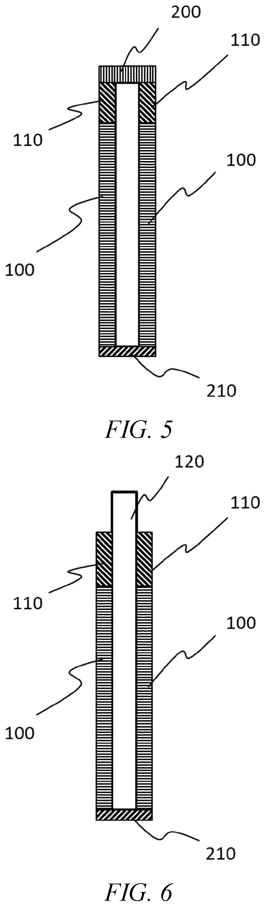

As shown in FIGS 4-6, in an embodiment of the present application, the present application provides an electrode plate 6 or 7 comprising a current collector 120 and an active material layer 100, wherein the current collector 120 comprises a main body portion 121 and tabs 122, the active material layer 100 is coated on the surface of the main body portion 121, and the tabs 122 extend from one end of the main body portion 121 along the first direction Z; a first insulating portion 200 is formed on the end face of the main body portion 121 that is provided with the tabs 122, while a second insulating portion 210 that is different from the first insulating portion 200 is formed on the end faces of the main body portion 121 that are not provided with the tabs 122.

Specifically, the electrode plate is generally sheet-shaped and has a plurality of faces, among which the two faces with the largest area facing each other are called "surfaces", and the other faces are called "end faces."

The applicant has found that the end face of the current collector is exposed in the processes of cutting the current collector and processing the tabs, which increases the probability of internal short circuit caused by the direct contact between the end face and the electrodes of opposite polarity. For example, as a positive electrode current collector, the surfaces of an aluminum foil are coated with a positive electrode active material, but the end faces thereof are directly exposed to the electrolyte solution, which increases the probability of short circuits caused by the direct contact between the end face of the aluminum foil and the negative electrode. By forming a first insulating portion 200 on the end face 121a that is provided with the tabs and forming a second insulating portion 210 on the end faces 121b, 121c, and 121d that are not provided with the tabs, the contact between the electrode plates of opposite polarity can be effectively prevented, thus avoiding internal short circuit and increasing the safety performance.

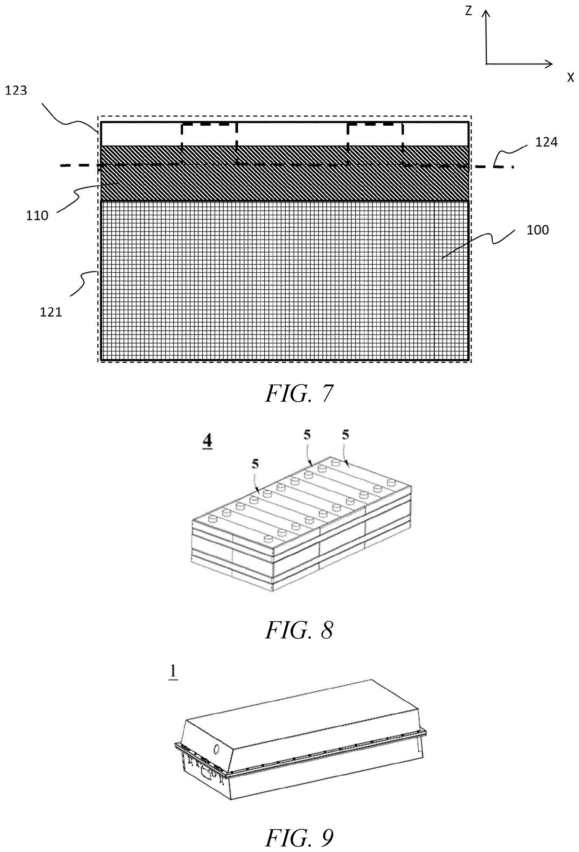

FIG. 7 shows a schematic cross-sectional view of electrode plates 6 and 7 before processing the tabs. As shown in FIG. 7, the electrode plate 6 or 7 comprises a main body portion 121 and an tab area 123. The tab area 123 is provided on one side of the main body portion 121 in the first direction Z. The main body portion 121 is coated with an active material layer 100. In addition, in some examples, a third insulating portion 110 described later is coated across the main body portion 121 and the tab area 123. In addition, the tabs 122 are formed by cutting the electrode plates 6 and 7 along the cutting line 124 or by laser processing.

In some embodiments, the first insulating portion 200 is, for example, an insulating coating layer formed on the end face during or after the processing of the tabs 122. The second insulating portion 210 is, for example, an insulating coating layer formed on the end face by means of coating etc., after cutting the electrode plate. For example, the insulating portion may be prepared by means of polymer coating, oxidation processing, atomic layer deposition, or evaporation, etc.

In some embodiments, the surface of the main body portion 121 that is close to the end portion of the tabs 122 is coated with a third insulating portion 110 in the second direction X perpendicular to the first direction Z, and the third insulating portion 110 is connected with the first insulating portion 200. By connecting the third insulating portion 110 with the first insulating portion 200, the end face of the electrode plates 6 and 7 that is exposed in the process of cutting the tabs can be effectively protected, which further increases the safety performance.

In some embodiments, the third insulating portion 110 and the first insulating portion 200 are made of the same material and are integrally formed. Thus, the first insulating portion 200 can be easily formed, and since the integral structure is relatively dense, the end face of the electrode plate that is exposed in the process of cutting the tabs can be further effectively protected, which further increases the safety performance.

In some embodiments, the surface of the tabs 122 that is close to the main body portion 121 is coated with a third insulating portion 110, and the end face of the tabs 122 that is connected with the third insulating portion 110 is provided with a first insulating portion 200. Thus, the end face of the electrode plate that is exposed in the process of cutting the tabs can be further effectively protected, which further increases the safety performance.

In some embodiments, the first insulating portion 200 comprises a polymer selected from at least one of polyolefins. With the use of the above polymer to form the first insulating portion 200, the end face of the electrode plate 6 and 7 can be densely coated, which further increases the safety performance.

In some embodiments, the melting point of the above polymer is 80°C - 300°C. By using a polymer having a melting point within the above range to form a first insulating portion 200, the polymer can be melted and then cured during the processing of the tabs 122, which further densely coats the end face of the electrode plate 6 and 7, thereby further increasing the safety performance.

In some embodiments, the first insulating portion 200 and the third insulating portion 110 comprise a polymer and ceramic. The polymer is selected from at least one of polyolefins, and the mass ratio of the polymer to the ceramic is above 26 : 74. Because the first insulating portion 200 and the third insulating portion 110 comprises the polymer and ceramic, the compactness of the insulating portions can be improved, so that on the one hand, the insulating property of the end face of the electrode plate is ensured, and on the other hand, the damage of the insulating portion is avoided.

In some embodiments, the first insulating portion 200 is formed by laser processing the third insulating portion 110. Therefore, while the tabs 122 are cut out from the electrode plate coated with the third insulating portion 110 by laser processing, the third insulating portion 110 can be melted and then cured on the end face of the incision to form a first insulating portion 200 coating the end face 121a , which can make it easy to form the first insulating portion and further increase the safety performance.

In some embodiments, the electrode plate shown in FIGS. 4-6 may be used as a positive electrode plate or a negative electrode plate. Since the aluminum foil as a positive electrode current collector is more prone to internal short circuit, the above structure is preferably applied to the positive electrode plate.

The material and the general structure of the positive and negative electrode plates, the electrolyte, and the separator are described below.

### [Positive electrode plate]

The positive electrode plate comprises a positive electrode current collector and a positive electrode film layer provided on at least one surface of the positive electrode current collector, the positive electrode film layer comprising the positive electrode active material of the first aspect of the present application.

As an example, the positive electrode current collector has two surfaces opposite in its own thickness direction, and the positive electrode film layer is provided on either or both of opposite surfaces of the positive electrode current collector.

In some embodiments, the positive current collector can be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material can be a positive electrode active material known in the art for batteries. As an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (e.g. LiCoO2), lithium nickel oxide (e.g. LiNiO2), lithium manganese oxide (e.g. LiMnO2, and LiMn2O4), lithium nickel cobalt oxide, lithium manganese cobalt oxide, lithium nickel manganese oxide, lithium nickel cobalt manganese oxide (e.g. LiNi1/3Co1/3Mn1/3O2 (also abbreviated as NCM333), LiNi0.5Co0.2Mn0.3O2 (also abbreviated as NCM523), LiNi0.5Co0.25Mn0.25O2 (also abbreviated as NCM211), LiNi0.6Co0.2Mn0.2O2 (also abbreviated as NCM622), LiNi0.8Co0.1Mn0.1O2 (also abbreviated as NCM811)), lithium nickel cobalt aluminum oxide (e.g. LiNi0.85Co0.15A10.05O2), and modified compounds thereof, etc. Examples of lithium-containing phosphates having olivine structures may include, but are not limited to, at least one of lithium iron phosphate (e.g. LiFePO4 (also referred to as LFP)), lithium iron phosphate and carbon composites, lithium manganese phosphate (e.g. LiMnPO4), lithium manganese phosphate and carbon composites, lithium iron manganese phosphate, and lithium iron manganese phosphate and carbon composites.

In some embodiments, the positive electrode film layer further comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further comprises a conductive agent. As an example, the conductive agent may comprise at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### [Negative electrode plate]

The negative electrode plate comprises a negative electrode current collector and a negative electrode film layer provided on at least one surface of the negative electrode current collector, wherein the negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more.

In some embodiments, the negative electrode film layer further comprises a binder. The binder may be selected from at least one of a styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further comprises a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode film layer further comprises other auxiliary agents, such as thickener (e.g., sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

The battery module, battery pack, and device of the present application will be described below by appropriately referring to the accompanying drawings.

### [Battery module]

In some embodiments, the secondary battery can be assembled into a battery module, and the number of the secondary batteries contained in the battery module may be one or more, and the specific number can be selected by those skilled in the art according to the application and capacity of the battery module.

FIG. 8 shows a battery module 4 as an example. Referring to FIG. 8, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

In some examples, the battery module 4 may also comprise a case with an accommodating space, and a plurality of secondary batteries 5 are accommodated in the accommodating space.

### [Battery pack]

In some embodiments, the above battery module may also be assembled into a battery pack, the number of the battery modules contained in the battery pack may be one or more, and the specific number can be selected by those skilled in the art according to the application and capacity of the battery pack.

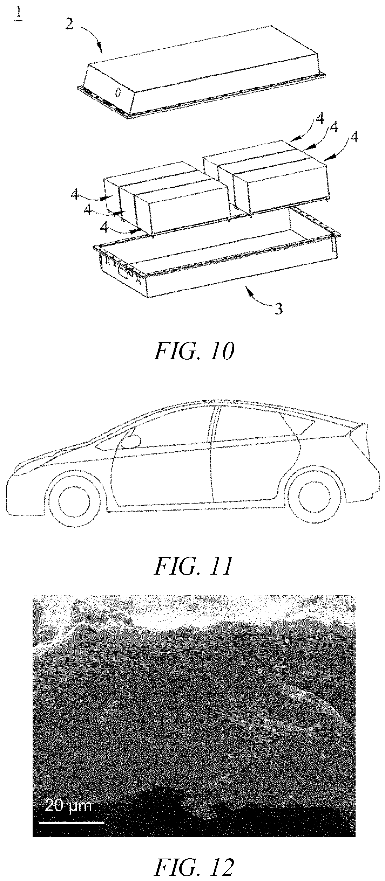

FIG. 9 and FIG. 10 show a battery pack 1 as an example. Referring to FIG. 9 and FIG. 10, the battery pack 1 may comprise a battery box and a plurality of battery modules 4 provided in the battery box. The battery box comprises an upper box body 2 and a lower box body 3, wherein the upper box body 2 can cover the lower box body 3 to form a closed space for accommodating the battery modules 4. A plurality of the battery modules 4 may be arranged in the battery box in any manner.

### [Power consuming device]

In addition, the present application further provides a power consuming device. The power consuming device comprises at least one of the secondary battery, battery module, or battery pack provided by the present application. The secondary battery, the battery module or the battery pack may be used as a power supply or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As a power consuming device, the secondary battery, battery module or battery pack can be selected according to the usage requirements thereof.

FIG. 11 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may use a secondary battery as a power source.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

### <Example 1>

### I. Preparation of positive electrode plate

In example 1, a method for preparing a positive electrode plate comprises the following steps (1) - (4).

### Step (1): preparation of polymer slurry

In a room temperature environment with a relative humidity of less than 2%, polyethylene (PE) particles and polyvinylidene fluoride (PVDF) are weighed according to the mass ratio in Table 1, a certain amount of N,N-dimethylformamide (NMP) solution is added slowly, and the mixture is stirred at a rotation speed of 800 rpm at 25°C for more than 2 hours to form a uniform and stable slurry. The particle size distribution of the polyethylene particles is 1-15 microns.

Step (2): preparation of positive electrode plate area and third insulating portion 110

A positive electrode active material of lithium manganate, a nickel-cobalt-manganese (NCM) ternary material, a conductive agent of carbon black, a binder of polyvinylidene fluoride (PVDF), and N-methylpyrrolidone (NMP) are mixed at a weight ratio of 67.34 : 30 : 28.86 : 2.7 : 1.1 and stirred until uniform to obtain a positive electrode slurry; and then the polymer slurry and the positive electrode slurry are parallelly and uniformly coated on the positive electrode current collector, wherein the polymer slurry is located at the edge of the positive electrode slurry, followed by drying, clod pressing, and cutting to obtain the positive electrode plate area and the third insulating portion 110.

### Step (3): preparation of second insulating portion 210

The polymer slurry is coated on the end faces 121b, 121c, and 121d of the positive electrode plate area, followed by drying to obtain the second insulating portion.

### Step (4): preparation of first insulating portion 200

An industrial laser (at a power of 80 watt (W), a feed speed of 10 m/min, and a frequency of 200-300 kHz) is used to cut the third insulating portion 110 and the positive electrode current collector, and a first insulating portion 200 with a thickness of 1 micron to 30 microns is formed at the edge of the positive electrode plate.

### II. Performance evaluation

The performances of the electrode plate prepared in part I above are tested by the following methods.

### (i) Morphology test

The insulation state can be determined by using a scanning electron microscope (SEM) (e.g., ZEISS Sigma 300) via taking photos of the end face of the electrode plate.

### (ii) Electrode plate lap-joint test

The positive electrode plate and negative electrode prepared in part I above are connected to the positive and negative electrodes of a battery with a capacity of 2.2 Ah and a voltage of 4.2 V, respectively, the 200 or 210 position of the positive electrode plate is directly in contact with the negative electrode (see Table 2), and whether there are sparks is observed. Moreover, a plurality of lapjoint points are selected, the same lap-joint method is used each time to verify protection effect.

### <Example 2> - <Example 9>

In examples 2-6 and 8-9, the positive electrode plates are obtained by using the same preparation method as in example 1, except that the type and content of each raw material are changed as shown in Table 1.

### <Comparative example 1>

In comparative example 1, the above steps (3) and (4) are omitted, such that a conventional electrode plate without the first insulating portion 200 and the second insulating portion 210 is obtained.

**[Table 1]**

| No. | Polymer | | Ceramic | | Binder | | Solvent | |
|---|---|---|---|---|---|---|---|---|
| | Type | Content (g) | Type | Content (g) | Type | Content (g) | Type | Conte nt (g) |
| Example 1 | PE particles | 1.85 | Boehmite | 0 | PVDF | 1.33 | NMP | 20 |
| Example 2 | PE particles | 1.67 | Boehmite | 0.06 | PVDF | 1.33 | NMP | 20 |
| Example 3 | PE particles | 1.39 | Boehmite | 1.33 | PVDF | 1.33 | NMP | 20 |
| Example 4 | PE particles | 1.17 | Boehmite | 1.97 | PVDF | 1.33 | NMP | 20 |
| Example 5 | PE particles | 0.93 | Boehmite | 2.67 | PVDF | 1.33 | NMP | 20 |
| Example 6 | PE particles | 0.53 | Boehmite | 4.79 | PVDF | 1.33 | NMP | 20 |
| Example 7 | PE particles | 1.67 | Alumina | 0.06 | PVDF | 1.33 | NMP | 20 |
| Example 8 | PE particles | 1.39 | Alumina | 1.33 | PVDF | 1.33 | NMP | 20 |
| Example 9 | PP particles | 1.85 | Boehmite | 0 | PVDF | 1.33 | NMP | 20 |
| Comparativ e example 1 | / | 0 | / | 0 | / | 0 | / | 0 |

**[Table 2]**

| No. | Electrode plate lap joint test | | | | | |
|---|---|---|---|---|---|---|
| | Lap joint position | Number of lap-joint | Effective protection ratio | Lap joint position | Number of lap-joint | Effective protection ratio |
| Example 1 | 200 | 100 | 98% | 210 | 100 | 66% |
| Example 2 | 200 | 100 | 95% | 210 | 100 | 71% |
| Example 3 | 200 | 100 | 97% | 210 | 100 | 58% |
| Example 4 | 200 | 100 | 95% | 210 | 100 | 53% |
| Example 5 | 200 | 100 | 86% | 210 | 100 | 46% |
| Example 6 | 200 | 100 | 38% | 210 | 100 | 67% |
| Example 7 | 200 | 100 | 97% | 210 | 100 | 73% |
| Example 8 | 200 | 100 | 91% | 210 | 100 | 65% |
| Example 9 | 200 | 100 | 96% | 210 | 100 | 76% |
| Comparative example 1 | 200 | 100 | 3% | 210 | 100 | 0% |

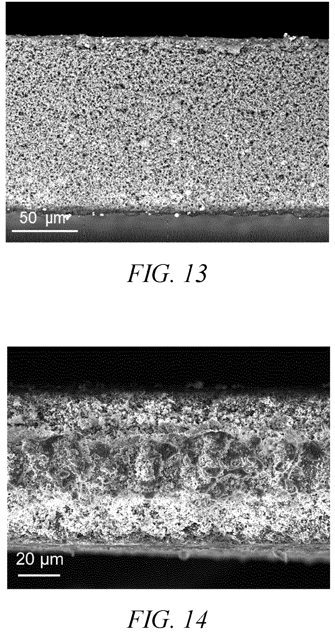

FIG. 12 shows a microscope photograph of an end face of the electrode plate of example 1 that is coated with a first insulating portion 200. FIG. 13 shows a microscope photograph of an end face of the electrode plate of example 1 that is coated with a second insulating portion 210. FIG. 14 shows a microscope photograph of an end face of an electrode plate that is not subjected to insulating coating. As shown in FIGS. 11-13, the end faces of the electrode plate that have a first insulating portion 200 and a second insulating portion 210 is obviously different from the comparative example, and the protective effect is obvious. Moreover, the end face having a first insulating portion 200 is more densely and insulatively coated, and a more excellent short-circuit prevention effect can be obtained.

In combination with the above Tables 1 and 2, the following conclusion may be drawn:

It can be seen from a comparison between examples 1-9 and comparative example 1 that in the electrode plate of the present application, the end faces of the electrode plate are provided with a first insulating portion 200 and a second insulating portion 210, which can effectively prevent the internal short circuit of the electrode plate and improve the protection effect.

It can be seen from the comparison between examples 1-5 and example 6 that in the electrode plate of the present application, the ratio of the polymer to the ceramic in the insulating slurry is above 26 : 74, which can further prevent the electrode plate from internal short circuit on the end face where the tabs are formed and effectively improve the protection effect.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that may be conceived by those skilled in the art to the embodiments, and other modes constructed by combining some of the constituent elements of the embodiments also fall within the scope of the present application.

## Claims

1. An electrode plate comprising a current collector and an active material layer, wherein
the current collector comprises a main body portion and tabs,
the active material layer is coated on the surface of the main body portion, and the tabs extend from one end of the main body portion along the first direction;
a first insulating portion is formed on the end face of the main body portion that is provided with the tabs, and
a second insulating portion is formed on the end faces of the main body portion that are not provided with the tabs.

2. The electrode plate according to claim 1, wherein
the surface of the main body portion that is close to the end portion of the tab is coated with a third insulating portion in a second direction perpendicular to the first direction, and
the third insulating portion is connected with the first insulating portion.

3. The electrode plate according to claim 2, wherein
the third insulating portion and the first insulating portion are made of the same material and are integrally formed.

4. The electrode plate according to claim 3, wherein
the first insulating portion and the third insulating portion comprise a polymer and ceramic,
the polymer is selected from at least one of polyolefins, and
the mass ratio of the polymer to the ceramic is above 26 : 74.

5. The electrode plate according to any one of claims 1-4, wherein
the surface of the tabs that is close to part of the main body portion is coated with the third insulating portion, and
the end face of the tabs that is connected with the third insulating portion is provided with the first insulating portion.

6. The electrode plate according to any one of claims 1-5, wherein
the first insulating portion comprises a polymer having a melting point of 80°C - 300°C.

7. The electrode plate according to claim 6, wherein
the polymer is selected from at least one of polyolefins.

8. The electrode plate according to any one of claims 2-4, wherein
the first insulating portion is formed by laser processing the third insulating portion.

9. The electrode plate according to claim 8, wherein
the first insulating portion is an insulating coating layer formed on the end face during the processing of the tabs.

10. A secondary battery, comprising
an electrode plate according to any one of claims 1-9.

11. A battery module, comprising
a secondary battery according to claim 10.

12. A battery pack, comprising
a battery module according to claim 11.

13. A power consuming device, comprising
at least one selected from a secondary battery according to claim 10, a battery module according to claim 11, or a battery pack according to claim 12.
